(19) Europäisches Patentamt / European Patent Office / Office européen des brevets

(11) **EP 4 269 367 A1**

(12) **EUROPEAN PATENT APPLICATION**
published in accordance with Art. 153(4) EPC

(43) Date of publication:
**01.11.2023 Bulletin 2023/44**

(21) Application number: **21910399.1**

(22) Date of filing: **10.12.2021**

(51) International Patent Classification (IPC):
*C03C 17/38* (2006.01)   *B32B 17/00* (2006.01)
*B60J 1/00* (2006.01)   *G02B 5/02* (2006.01)

(52) Cooperative Patent Classification (CPC):
**B32B 17/00; B60J 1/00; C03C 17/38; G02B 5/02**

(86) International application number:
**PCT/JP2021/045646**

(87) International publication number:
**WO 2022/138250 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 JP 2020215369**

(71) Applicant: **AGC INC.**
**Chiyoda-ku,**
**Tokyo 1008405 (JP)**

(72) Inventor: **SUZUKI Katsumi**
**Tokyo 100-8405 (JP)**

(74) Representative: **Müller-Boré & Partner**
**Patentanwälte PartG mbB**
**Friedenheimer Brücke 21**
**80639 München (DE)**

(54) **ANTIGLARE FILM-PROVIDED TRANSPARENT SUBSTRATE AND PRODUCTION METHOD THEREFOR**

(57) The present invention pertains to an antiglare film-provided transparent substrate comprising: a transparent substrate having two mutually opposing main surfaces; and an antiglare film attached to one of the two main surfaces. The main surfaces are in a flat shape, and have a greater longitudinal-direction diffusion value measured for the longitudinal direction of the main surfaces than a short-direction diffusion value measured for the short direction of the main surfaces.

*FIG. 1*

EP 4 269 367 A1

**Description**

Technical Field

The present invention relates to an antiglare film-provided transparent substrate and a method for manufacturing the same.

Background Art

In recent years, a method of installing a cover glass on a front surface of an image display device such as a liquid crystal display has been used from the viewpoint of aesthetic appearance. However, there is a problem of glare caused by reflection of outside light by the cover glass.

Therefore, it is known that, in order to prevent the glare, a film having an antiglare property (a glareproof film) is formed on the surface of the cover glass, or a film with a glareproof film (an antiglare film) is laminated to the surface of the cover glass. The glareproof film has unevenness on the surface thereof, and diffusely reflects outside light, thereby making a reflected image unclear. As the film with the glareproof film, for example, Patent Literature 1 discloses an antiglare display film that prevents the occurrence of interference with low haze, has excellent antiglare effect, scratch resistance, and transparency, and prevents deterioration in image quality.

Citation List

Patent Literature

Patent Literature 1: JPH11-286083A

Summary of Invention

Technical Problem

However, the antiglare film-provided cover glass using the film with the glareproof film described in Patent Literature 1 or the like may not sufficiently prevent the glare.

Accordingly, an object of the present invention is to provide an antiglare film-provided transparent substrate that exhibits a more excellent antiglare effect.

Means for Solving Problems

As a result of studies on the above problems, the present inventor has found that the antiglare effect of the antiglare film-provided transparent substrate can be improved under specific conditions when an index value affecting an antiglare performance varies depending on a direction of the film on the antiglare film. That is, when looking at a screen of an image display device or the like, a line of sight of a person moves along a longitudinal direction of a major surface thereof, making it easier to recognize information. In this case, the sensitivity to the glare tends to be high in the longitudinal direction, and the sensitivity to the glare tends to be low in a short direction. Therefore, it has been found that by increasing the antiglare performance in the longitudinal direction and lowering the antiglare performance in the short direction, an entire screen can be visually recognized with a uniform antiglare performance, and the antiglare effect is good. Based on these findings, the present invention has been completed.

That is, the present invention relates to the following (1) to (9).

(1) An antiglare film-provided transparent substrate including:

a transparent substrate having two major surfaces opposed to each other; and
an antiglare film laminated to one of the two major surfaces,
in which the major surfaces have a flat shape, and
a longitudinal-direction diffusion value measured in a longitudinal direction of the major surface is larger than
a short-direction diffusion value measured in a short direction of the major surface.

(2) The antiglare film-provided transparent substrate according to (1), in which a difference between the longitudinal-direction diffusion value and the short-direction diffusion value is 0.01 or more.

(3) The antiglare film-provided transparent substrate according to (1) or (2), in which, when a major surface of the antiglare film-provided transparent substrate on a side where the antiglare film is laminated is defined as a first major surface, an antireflection film is further provided on a side of the first major surface.

(4) The antiglare film-provided transparent substrate according to any one of (1) to (3), in which an antifouling film is further provided on the side of the first major surface.

(5) The antiglare film-provided transparent substrate according to any one of (1) to (4), in which the transparent substrate is a glass substrate.

(6) The antiglare film-provided transparent substrate according to (5), in which the glass substrate is chemically strengthened.

(7) The antiglare film-provided transparent substrate according to any one of (1) to (4), in which the transparent substrate is a resin substrate.

(8) A method for manufacturing an antiglare film-provided transparent substrate, the method including:

using a transparent substrate having two major surfaces opposed to each other, the major surfaces having a flat shape, and an antiglare film having a first-direction diffusion value measured on the antiglare film in a first direction larger than a second-direction diffusion value measured in a second direction orthogonal to the first direction; and

laminating the antiglare film to one major surface of the transparent substrate such that the first direction is parallel to a longitudinal direction of the major surface.

(9) An image display device including the antiglare film-provided transparent substrate according to any one of (1) to (7).

Effect of the Invention

According to the present invention, when a specific antiglare film is used, an antiglare film-provided transparent substrate exhibiting a more excellent antiglare effect can be provided by adjusting the longitudinal-direction diffusion value of the major surface to be larger than the short-direction diffusion value.

Brief Description of Drawings

FIG. 1 is a cross-sectional view schematically illustrating an antiglare film-provided transparent substrate according to the present embodiment.

FIG. 2 is a perspective view schematically illustrating the antiglare film-provided transparent substrate according to the present embodiment.

FIG. 3 is a diagram schematically illustrating a measuring apparatus used for measuring a diffusion value.

Description of Embodiments

Hereinafter, embodiments of the present invention will be described in detail with reference to the drawings.

<Antiglare Film-provided Transparent Substrate>

An antiglare film-provided transparent substrate according to the present embodiment includes a transparent substrate having two major surfaces opposed to each other, and an antiglare film laminated to one of the two major surfaces. In the antiglare film-provided transparent substrate according to the present embodiment, the major surface has a flat shape, and a longitudinal-direction diffusion value measured in a longitudinal direction of the major surface is larger than a short-direction diffusion value measured in a short direction of the major surface.

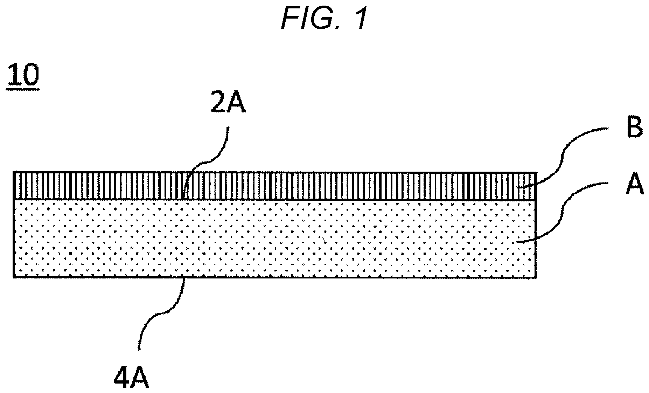

FIG. 1 is a cross-sectional view schematically illustrating the antiglare film-provided transparent substrate according to the present embodiment. In FIG. 1, a transparent substrate A has major surfaces 2A and 4A opposed to each other. An antiglare film B is laminated to one major surface 2A of the transparent substrate A. That is, an antiglare film-provided transparent substrate 10 has a configuration in which the antiglare film B is laminated to the transparent substrate A.

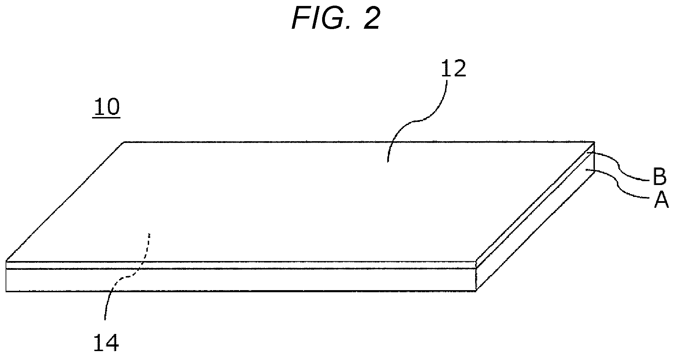

FIG. 2 is a perspective view schematically illustrating the antiglare film-provided transparent substrate according to the present embodiment. Hereinafter, in the antiglare film-provided transparent substrate 10, a major surface on a side where the antiglare film B is laminated is referred to as a first major surface 12. A major surface on a side where no antiglare film B is laminated, which is opposed to the first major surface 12, is referred to as a second major surface 14. In the antiglare film B, a surface opposite to a laminating surface in contact with the transparent substrate A has an uneven shape for imparting an antiglare performance, which is omitted in the drawing.

In the antiglare film-provided transparent substrate according to the present embodiment, the major surface has a flat shape. Specific examples of the flat shape include a rectangle, an ellipse, a trapezoid, and a parallel quadrilateral. FIG. 2 shows an example in which the major surface is a rectangle. Specifically, the longitudinal direction of the major surface refers to a long side direction in a case of a rectangle, a long axis direction in a case of an ellipse, a direction parallel to a longer side of a lower base and a height in a case of a trapezoid, and a direction parallel to a longer side of a lower base and a height in a case of a parallel quadrilateral. The short direction of the major surface refers to a short side direction in the case of a rectangle, a short axis direction in the case of an ellipse, a direction parallel to a shorter side of a lower base and a height in the case of a trapezoid, and a direction parallel to a shorter side of a lower base and a height in the case of a parallel quadrilateral. The flat shape is not limited to the above, and includes a shape similar to a rectangle such as a rectangle with one or more of four corners rounded, a shape similar to an ellipse such as an oval and an elongated circle (a corner-rounded rectangle), a shape similar to a trapezoid, a shape similar to a parallel quadrilateral, and the like.

In the major surface, a ratio of a maximum diameter in the longitudinal direction to a maximum diameter in the short direction is more than 1, preferably 2 or more, and more preferably 5 or more. The effect of the present invention tends to be obtained more suitably as the ratio increases. An upper limit of the ratio of the maximum diameter in the longitudinal direction to the maximum diameter in the short direction is not particularly limited, and the ratio may be, for example, 10 or less.

Shapes of the first major surface and the second major surface are generally the same, or may be partially different shapes in a case where processing is performed on an edge portion or a partial region of the major surface from the viewpoint of designability or the like. Specifically, for example, the first major surface and the second major surface may have different chamfer widths. The antiglare film-provided transparent substrate according to the present embodiment may have a three-dimensional shape formed by bending or the like.

The longitudinal direction and the short direction of the first major surface are generally the same as those of the second major surface. When they are different, the longitudinal direction and the short direction of the first major surface are defined as the longitudinal direction and the short direction of the major surface.

In the antiglare film-provided transparent substrate according to the present embodiment, the longitudinal-direction diffusion value measured in the longitudinal direction of the major surface is larger than the short-direction diffusion value measured in the short direction of the major surface. The diffusion value is a glare degree of surrounding images on the antiglare film-provided transparent substrate, that is, an index related to an antiglare property. A maximum value of the diffusion value is 1, and it can be evaluated that the larger the diffusion value, the more prevented the glare and the higher the antiglare property of the antiglare film-provided transparent substrate.

Here, the diffusion value is measured as follows.

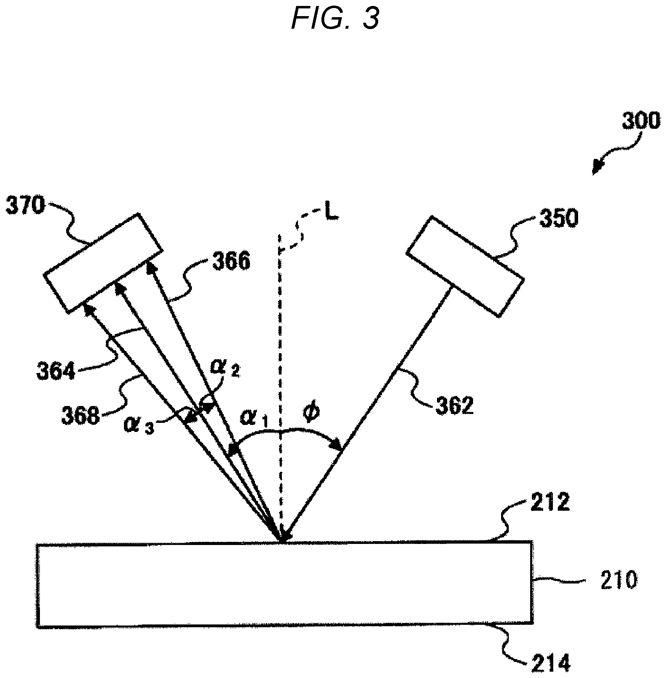

FIG. 3 is a diagram schematically illustrating a measuring apparatus used for measuring the diffusion value.

As shown in FIG. 3, a measuring apparatus 300 includes a light source 350 and a detector 370, and a sample to be measured, that is, an antiglare film-provided transparent substrate 210 is disposed in the measuring apparatus 300. The antiglare film-provided transparent substrate 210 has a first major surface 212 and a second major surface 214. The light source 350 emits slit-shaped first light 362 having a width of 101 mm toward the antiglare film-provided transparent substrate 210. The detector 370 receives reflected light reflected from the first major surface 212 at a predetermined angle and detects luminance thereof.

The antiglare film-provided transparent substrate 210 is disposed such that the first major surface 212 is on a side facing to the light source 350 and the detector 370. Light detected by the detector 370 is reflected light reflected by the antiglare film-provided transparent substrate 210. A liquid crystal display is laminated to a rear surface of the antiglare film-provided transparent substrate 210 by an acrylic adhesive.

In the measurement, the first light 362 is emitted from the light source 350 of the measuring apparatus 300 toward the antiglare film-provided transparent substrate 210.

The first light 362 is applied to the antiglare film-provided transparent substrate 210 at an angle $\varphi$ inclined counterclockwise by 2° with respect to a direction of a normal line L of the antiglare film-provided transparent substrate 210. Since an actual measurement includes an error, the angle $\varphi$ more accurately includes a range of 2°±0.1°.

Next, the detector 370 is used to measure luminance $R_1$ of light regularly reflected at a first angle $\alpha_1$ (hereinafter referred to as "first reflected light 364") from the first major surface 212 of the antiglare film-provided transparent substrate 210.

In practice, since the angle (the first angle $\alpha_1$) with respect to the normal line L of the first reflected light 364 is $\alpha_1 = -\varphi$, relation of $\alpha_1 = -2°\pm0.1°$ is obtained. A minus (-) sign indicates that the angle is inclined counterclockwise with respect to the normal line L, and a plus (+) sign indicates that the angle is inclined clockwise with respect to the normal line L.

In the following, since the first angle $\alpha_1$ of the first reflected light 364 is used as a reference, the angle $\alpha_1 = 0° \pm 0.1°$ is specified.

Similarly, luminance $R_2$ of reflected light reflected at a second angle $\alpha_2$ (hereinafter referred to as "second reflected light 366") from the first major surface 212 of the antiglare film-provided transparent substrate 210 and luminance $R_3$ of reflected light reflected at a third angle $\alpha_3$ (hereinafter referred to as "third reflected light 368") are measured. Here, the second angle $\alpha_2$ is $\alpha_2 = +0.5°\pm0.1°$ based on the first angle $\alpha_1$. The third angle $\alpha_3$ is $\alpha_3 = -0.5°\pm0.1°$ based on the first angle $\alpha_1$.

The diffusion value of the antiglare film-provided transparent substrate 210 is calculated by the following equation (1) using the obtained luminance $R_1$, $R_2$, and $R_3$:

$$\text{Diffusion value} = (R_2 + R_3)/(2 \times R_1) \qquad \text{Equation (1)}$$

Here, when a trajectory of the first light 362 is projected onto the first major surface of the antiglare film-provided transparent substrate in parallel with a thickness direction of the antiglare film-provided transparent substrate, the projected trajectory is called a projection trajectory. The diffusion value measured by disposing the transparent substrate such that such a projection trajectory is parallel to the longitudinal direction of the major surface is defined as the diffusion value measured in the longitudinal direction of the major surface, that is, the longitudinal-direction diffusion value. The diffusion value measured by disposing the transparent substrate such that the projection trajectory is parallel to the short direction of the major surface is defined as the diffusion value measured in the short direction of the major surface, that is, the short-direction diffusion value. Hereinafter, similarly, a diffusion value measured by disposing a sample to be measured such that the projection trajectory is parallel to a specific direction on a surface to be measured is referred to as a specific-direction diffusion value.

It is confirmed that the diffusion value is correlated with a determination result of the antiglare property (a reflected image diffusing property) by visual observation of an observer, and exhibits a behavior close to visuality of a person. For example, when the diffusion value shows a large value (a value close to 1), the reflected image diffusing property, that is, the antiglare property is excellent, and conversely, when the diffusion value shows a small value, the reflected image diffusing property tends to be poor. Therefore, the diffusion value can be used as a quantitative index for determining the antiglare property of the transparent substrate.

Such measurement can be performed by using an apparatus SMS-1000 manufactured by DM & S, for example.

When using the apparatus, a C1614Alens having a focal length of 16 mm is used with an aperture of 5.6. A distance from the first major surface 212 of the antiglare film-provided transparent substrate 210 to a camera lens is about 300 mm, and an imaging scale is set in a range of 0.0276 to 0.0278.

In the antiglare film-provided transparent substrate according to the present embodiment, the longitudinal-direction diffusion value is larger than the short-direction diffusion value. The present inventor has found that, in the case of using an antiglare film having different antiglare performances depending on the direction on the film, a more excellent antiglare effect can be obtained by making the longitudinal-direction diffusion value larger than the short-direction diffusion value. The reason for this is considered as follows. That is, when the major surface has a flat shape, the observer is highly aware of the antiglare property in the longitudinal direction due to the structure. Specifically, for example, when looking at an image display device or the like, the line of sight of a person tends to move along the longitudinal direction of the major surface thereof to recognize information. Therefore, from an observer viewpoint, the sensitivity to the glare of an object or a person existing along the longitudinal direction of the major surface is high, and the sensitivity to the glare is likely to be low in the short direction. Accordingly, it is considered that even when the same antiglare film is used, by adjusting the longitudinal-direction diffusion value to be large, an entire surface can be visually recognized with a uniform antiglare performance when the antiglare film-provided transparent substrate is used in an image display device or the like, and the obtained antiglare effect is likely to be more excellent.

In addition to the above, the line of sight of a person relatively often moves in a left-right direction to recognize information regardless of the shape of the major surface. Therefore, in the case of using the antiglare film-provided transparent substrate with the longitudinal direction of the major surface parallel to the left-right direction as seen from a user, awareness in the longitudinal direction caused by the shape of the major surface and awareness in the left-right direction act in the same direction, the sensitivity to the glare in the longitudinal direction (the left-right direction) is likely to be higher, and the sensitivity to the glare in the short direction (an up-down direction) is likely to be lower. Accordingly, the antiglare film-provided transparent substrate and an image display device including the antiglare film-provided transparent substrate of the present invention is preferred since a more excellent antiglare effect is easily obtained when the longitudinal direction of the major surface and the left-right direction as seen from the observer (the user) are disposed in parallel. Specifically, for example, when the image display device including the antiglare film-provided transparent substrate of the present invention is an image display device mounted on a vehicle or the like, the left-right direction as seen from the user is generally a direction perpendicular to a height direction of the vehicle.

When the difference between the longitudinal-direction diffusion value and the short-direction diffusion value is, for example, preferably 0.01 or more, more preferably 0.03 or more, and even more preferably 0.05 or more, the effect of the present invention tends to be good. The difference between the longitudinal-direction diffusion value and the short-direction diffusion value is preferably 0.1 or less, more preferably 0.08 or less, and even more preferably 0.06 or less.

An average diffusion value of the antiglare film-provided transparent substrate may be appropriately adjusted depending on the use. For example, in the case of an in-vehicle use, the average diffusion value is preferably 0.05 or more, more preferably 0.1 or more, and even more preferably 0.15 or more, from the viewpoint of preventing the glare. In this case, the average diffusion value is preferably 0.8 or less, more preferably 0.7 or less, and even more preferably 0.6 or less, from the viewpoint of image clarity.

In the case of home appliance use, the average diffusion value is preferably 0.01 or more, more preferably 0.1 or more, and even more preferably 0.15 or more, from the viewpoint of preventing the glare. In this case, the average diffusion value is preferably 0.7 or less, more preferably 0.6 or less, even more preferably 0.5 or less, and particularly preferably 0.4 or less, from the viewpoint of the image clarity.

Here, the average diffusion value refers to an average value of the longitudinal-direction diffusion value and the short-direction diffusion value.

(Transparent Substrate)

The transparent substrate may be a transparent substrate having excellent transparency, and a material thereof is not particularly limited.

The transparent substrate is preferably made of a material having a refractive index of 1.4 or more and 1.9 or less. This is because, when optically adhering a display, a touch panel, or the like, reflection on the adhering surface can be sufficiently prevented.

As the material of the transparent substrate, for example, a glass substrate or a resin substrate is preferred, and a glass substrate is more preferred.

Glass having various compositions can be used as the glass substrate. For example, the glass used for the glass substrate preferably contains sodium, and preferably has a composition capable of being strengthened by molding or a chemical strengthening treatment. Specific examples thereof include aluminosilicate glass, soda lime glass, borosilicate glass, lead glass, alkali barium glass, and aluminoborosilicate glass.

A thickness of the glass substrate is not particularly limited, and is generally preferably 3 mm or less, and more preferably 1.5 mm or less in order to effectively perform the chemical strengthening treatment. From the viewpoint of strength and weight, the thickness of the glass substrate is typically 0.2 mm or more.

The glass substrate is preferably a chemically strengthened glass which is chemically strengthened in order to increase the strength of the cover glass.

As the resin substrate, a thermoplastic resin or a thermosetting resin can be used. Examples of the resin used for the resin substrate include a polyvinyl chloride resin, a polyethylene resin, a polypropylene resin, a polystyrene resin, a polyvinyl acetate resin, a polyester resin, a polyurethane resin, a cellulose-based resin, an acrylic resin, an acrylonitrile-styrene (AS) resin, an acrylonitrile-butadiene-styrene (ABS) resin, a fluorine-based resin, a thermoplastic elastomer, a polyamide resin, a polyimide resin, a polyacetal resin, a polycarbonate resin, a modified polyphenylene ether resin, a polyethylene terephthalate resin, a polybutylene terephthalate resin, a polylactic acid-based resin, a cyclic polyolefin resin, and a polyphenylene sulfide resin. Among them, a cellulose-based resin is preferred, and a triacetyl cellulose resin, a polycarbonate resin, and a polyethylene terephthalate resin are more preferred. These resins may be used alone or in combination of two or more kinds thereof.

The thickness of the resin substrate is not particularly limited, and is preferably 0.2 mm to 5 mm, and more preferably 0.3 mm to 3 mm.

(Antiglare Film)

The antiglare film includes a base material and a glareproof film formed on the base material. The glareproof film has an uneven shape on the surface thereof to increase haze and impart an antiglare property. The antiglare film is not particularly limited as long as it can be laminated to the transparent substrate in a predetermined direction to obtain an antiglare film-provided transparent substrate having a longitudinal-direction diffusion value larger than a short-direction diffusion value. That is, the antiglare film may have different antiglare performances depending on the direction on the film. More specifically, the antiglare film may have a first-direction diffusion value measured on the antiglare film in a first direction larger than a second-direction diffusion value measured in a second direction orthogonal to the first direction. The diffusion value of the antiglare film may be measured by a method similar to that for the antiglare film-provided transparent substrate described above, with the surface of the antiglare film on which the glareproof film is formed being disposed on the side facing to the light source and the detector.

The present inventor has newly found that an antiglare film manufactured by a specific method has different antiglare performances depending on the direction on the film. That is, it has been found that, in a case where the base material of the antiglare film is wet-coated with an antiglare solution by a roll to roll method, a difference in the antiglare performance occurs between a machine direction (MD) and a width direction (TD) during manufacturing, and an MD diffusion value is larger than a TD diffusion value. Accordingly, for example, by laminating such an antiglare film such that the MD thereof is parallel to the longitudinal direction of the major surface, an antiglare film-provided transparent substrate having a longitudinal-direction diffusion value larger than a short-direction diffusion value is obtained.

Such a difference in diffusion value is considered to be caused by a difference in tension between the MD and the TD during coating. Accordingly, as the antiglare film used in the present embodiment, a film obtained by wet-coating the base material of the antiglare film with an antiglare solution by a roll to roll method can be suitably used. Examples of a method of adjusting the tension includes a method of adjusting tension in a machine direction (MD) to adjust a balance of the tension in the MD and the tension in the TD.

The material of the base material of the antiglare film is not particularly limited, and for example, a thermoplastic resin or a thermosetting resin can be used. Examples of the thermoplastic resin or the thermosetting resin include a polyvinyl chloride resin, a polyethylene resin, a polypropylene resin, a polystyrene resin, a polyvinyl acetate resin, a polyester resin, a polyurethane resin, a cellulose-based resin, an acrylic resin, an acrylonitrile-styrene (AS) resin, an acrylonitrile-butadiene-styrene (ABS) resin, a fluorine-based resin, a thermoplastic elastomer, a polyamide resin, a polyimide resin, a polyacetal resin, a polycarbonate resin, a modified polyphenylene ether resin, a polyethylene terephthalate resin, a polybutylene terephthalate resin, a polylactic acid-based resin, a cyclic polyolefin resin, and a polyphenylene sulfide resin. Among them, a cellulose-based resin is preferred, and a triacetyl cellulose resin, a polycarbonate resin, and a polyethylene terephthalate resin are more preferred.

A thickness of the base material is also not particularly limited, and is preferably 10 $\mu$m or more, and more preferably 20 $\mu$m or more, from the viewpoint of productivity. From the viewpoint of designability, the thickness is preferably 100 $\mu$m or less, and more preferably 80 $\mu$m or less.

The glareproof film is obtained by applying and drying, to the base material, a solution (an antiglare solution) obtained by dispersing at least a particulate substance itself having an antiglare property in a solution with a polymer resin as a binder dissolved therein.

Examples of the particulate substance having an antiglare property include inorganic fine particles such as silica, clay, talc, calcium carbonate, calcium sulfate, barium sulfate, aluminum silicate, titanium oxide, synthetic zeolite, alumina, and smectite, and organic fine particles made of a styrene resin, a urethane resin, a benzoguanamine resin, a silicone resin, and an acrylic resin.

As the polymer resin as the binder, polymer resins such as a polyester resin, an acrylic resin, an acrylic urethane resin, a polyester acrylate resin, a polyurethane acrylate resin, an epoxy acrylate resin, and a urethane resin can be used. From the viewpoint of film hardness, the polymer resin as the binder is preferably an acrylic resin.

A shape of the antiglare film is generally the same as the shape of the major surface of the transparent substrate to which the antiglare film is laminated. In the case where a part of the major surface to which the antiglare film is laminated is not flat, or in the case where an antiglare property is not imparted to a portion having a specific function such as a camera, the shape of the antiglare film may be a shape processed such that the antiglare film is not laminated to a specific region of the major surface. For the same reason, a part of the antiglare film may have a region having no glareproof film.

(Adhesive)

In order to laminate the antiglare film to the transparent substrate, an adhesive is preferably used as necessary.

Examples of the adhesive include an acrylic adhesive, a silicone-based adhesive, and a urethane-based adhesive. From the viewpoint of durability, the adhesive is preferably an acrylic adhesive. The adhesive may be used by being applied to the surface of the antiglare film having no glareproof film, or may be used by being applied to the surface of the transparent substrate to which the antiglare film is laminated. From the viewpoint of durability, it is preferred to apply an adhesive to the antiglare film. An adhesive formed in a sheet shape or the like in advance may be used. In the case where the base material of the antiglare film has a self-adsorption property, the antiglare film may be laminated to the transparent substrate without using an adhesive.

The antiglare film-provided transparent substrate according to the present embodiment may further include various functional films selected from an antireflection film, an antifouling film, and the like in addition to the above.

(Antireflection Film)

The antiglare film-provided transparent substrate according to the present embodiment may include an antireflection film.

The antireflection film is a film that prevents reflection of incident light and makes a reflected image unclear.

The antireflection film is preferably provided on the glareproof film on the first major surface side. It is also preferred to provide the antireflection film on the second major surface side. When the antireflection film is provided on the second major surface side, the antireflection film may be directly provided on the transparent substrate, or an antireflection film-provided film with an antireflection film provided on a base material may be laminated. When both a hard coat film and the antireflection film are provided on the second major surface side, the antireflection film is preferably provided on the hard coat film. The antireflection film may have a configuration in which, for example, a high-refractive-index layer having a refractive index of 1.9 or more at a wavelength of 550 nm and a low-refractive-index layer having a refractive index of 1.6 or less at a wavelength of 550 nm are laminated. The antireflection film is not particularly limited as long as it can prevent reflection of light.

When the antireflection film has the configuration in which a high-refractive-index layer and a low-refractive-index layer are laminated, one layer of the high-refractive-index layer and one layer of the low-refractive-index layer may each contained in the antireflection film, or two or more layers of the high-refractive-index layer and two or more layers of the low-refractive-index layer may each contained in the antireflection film. When two or more high-refractive-index layers and two or more low-refractive-index layers are included, the high-refractive-index layers and the low-refractive-index layers are preferably alternately laminated.

Materials of the high-refractive-index layer and the low-refractive-index layer are not particularly limited, and can be appropriately selected in consideration of a required degree of antireflection property, productivity, and the like. As the material constituting the high-refractive-index layer, for example, one or more selected from niobium oxide ($Nb_2O_5$), titanium oxide ($TiO_2$), zirconium oxide ($ZrO_2$), tantalum oxide ($Ta_2O_5$), and silicon nitride ($Si_3N_4$) can be preferably used. As the material constituting the low-refractive-index layer, one or more selected from silicon oxide ($SiO_2$), a material containing a mixed oxide of Si and Sn, a material containing a mixed oxide of Si and Zr, and a material containing a mixed oxide of Si and Al can be preferably used.

From the viewpoint of the productivity and refractive index, the antireflection film preferably has a configuration in which the high-refractive-index layer is a layer made of one selected from niobium oxide, tantalum oxide, and silicon nitride, and the low-refractive-index layer is a layer made of silicon oxide.

The method for forming the respective layers constituting the antireflection film is not particularly limited, and for example, a vacuum deposition method, an ion beam assisted deposition method, an ion plate method, a sputtering method, a plasma CVD method, or the like can be used. Among the film-forming methods, the use of the sputtering method is preferred since a dense and highly durable film can be formed. Particularly, a sputtering method such as a pulse sputtering method, an AC sputtering method, and a digital sputtering method is preferred.

For example, when performing film-forming by a pulse sputtering method, the film-forming is performed by disposing the antiglare film-provided transparent substrate in a chamber of a mixed gas atmosphere of an inert gas and an oxygen gas, and selecting a target so as to have a desired composition as a material for forming the high-refractive-index layer or the low-refractive-index layer. At this time, the type of the inert gas in the chamber is not particularly limited, and various inert gases such as argon and helium can be used. When the high-refractive-index layer and the low-refractive-index layer are formed by the pulse sputtering method, a layer thickness of each layer can be adjusted by, for example, adjusting a discharge power or adjusting a film formation time. In the case where the antiglare film-provided transparent substrate includes the antireflection film, the diffusion value measured on the first major surface tends to be smaller than that in the case where the antireflection film is not provided, and a magnitude relationship between the longitudinal-direction diffusion value and the short-direction diffusion value does not generally change.

(Antifouling Film)

The antiglare film-provided transparent substrate of the present invention may include an antifouling film (also referred to as an "anti finger print (AFP) film") from the viewpoint of protecting the outermost surface. The antifouling film is preferably provided, for example, on the outermost surface on the first major surface side. Specifically, the antifouling film is preferably provided on the glareproof film, or on the antireflection film when the antireflection film is provided on the glareproof film. The antifouling film can be composed of, for example, a fluorine-containing organosilicon compound. The fluorine-containing organosilicon compound is not particularly limited as long as it can impart an antifouling property, a water-repellent property, and an oil-repellent property, and examples thereof include a fluorine-containing organosilicon compound having one or more groups selected from the group consisting of a polyfluoropolyether group, a polyfluoroalkylene group, and a polyfluoroalkyl group. The polyfluoropolyether group is a divalent group having a structure in which a polyfluoroalkylene group and an etheric oxygen atom are alternately bonded.

As a commercially available fluorine-containing organosilicon compound having one or more groups selected from the group consisting of a polyfluoropolyether group, a polyfluoroalkylene group, and a polyfluoroalkyl group, KP-801 (trade name, manufactured by Shin-Etsu Chemical Co., Ltd.), KY178 (trade name, manufactured by Shin-Etsu Chemical Co., Ltd.), KY-130 (trade name, manufactured by Shin-Etsu Chemical Co., Ltd.), KY-185 (trade name, manufactured by Shin-Etsu Chemical Co., Ltd.), and Optool (registered trademark) DSX and Optool AES (trade name, all manufactured by Daikin Industries, Ltd.) can be preferably used.

When the antireflection films are formed on both major surfaces of the antiglare film-provided transparent substrate, the antifouling films can be formed on both antireflection films, or only one of the surfaces can be laminated with the antifouling film. This is because the antifouling film may be provided at a place where a human hand or the like may come into contact with the antifouling film, and the antifouling film can be selected according to the use or the like.

The antireflection film and the antifouling film may be formed after the antiglare film is laminated to the transparent substrate, or may be formed on the transparent substrate or the antiglare film before laminating such that the respective films (layers) are provided at the above-described preferred positions after laminating.

<Method for Manufacturing Antiglare Film-provided Transparent Substrate>

A method for manufacturing an antiglare film-provided transparent substrate according to the present embodiment is not particularly limited, and the antiglare film-provided transparent substrate can be manufactured by the following method as an example.

That is, the method includes: using a transparent substrate having two major surfaces opposed to each other and having a flat shape, and an antiglare film having a first-direction diffusion value measured on the antiglare film in a first direction larger than a second-direction diffusion value measured in a second direction orthogonal to the first direction; and laminating the antiglare film to one major surface of the transparent substrate such that the first direction is parallel to a longitudinal direction of the major surface.

The transparent substrate and the antiglare film are the same as those described above, and preferred embodiments thereof are also the same.

The antiglare film is preferably laminated to one major surface of the transparent substrate such that the first direction is parallel to the longitudinal direction of the major surface of the transparent substrate. Specifically, in a case where an antiglare film manufactured by wet-coating with an antiglare solution by a roll to roll method is used as the antiglare film, a machine direction (MD) during manufacturing is the first direction and a width direction (TD) is the second direction. Therefore, it is preferred to make the MD parallel to the longitudinal direction of the major surface. By such a method, the antiglare film-provided transparent substrate according to the present embodiment is obtained. Here, the term "parallel" means that an inclination angle with respect to a reference line is 30° or less.

The method for manufacturing an antiglare film-provided transparent substrate according to the present embodiment may further include, if necessary, applying the above-described adhesive, and forming various functional films selected from a hard coat film, an antireflection film, an antifouling film, and the like.

The antiglare film-provided transparent substrate according to the present embodiment is suitably used as a cover glass of an image display device, preferably a cover glass of an image display device mounted on a vehicle or the like such as an image display device of a navigation system mounted on a vehicle or the like, particularly a cover glass of a center information display (CID) mounted at the center of a vehicle. That is, the present invention also relates to an image display device including the antiglare film-provided transparent substrate. In the image display device of the present invention, preferred embodiments of the antiglare film-provided transparent substrate are the same as those described above. The image display device of the present invention is not particularly limited, and is preferably an image display device of a navigation system mounted on a vehicle or the like, or a center information display (CID) mounted at the center of a vehicle.

Example

Hereinafter, the present invention will be described in detail with reference to Examples, but the present invention is not limited thereto. Examples 1 and 2 are Working Examples, and Examples 3 and 4 are Comparative Examples.

(Example 1)

A chemically strengthened glass substrate having a length of 280 mm, a width of 125 mm, and a thickness of 1.1 mm (Dragontrail (registered trademark) manufactured by AGC Inc.) was used as a transparent substrate. An antiglare film (trade name: VH66, manufactured by Toppan TOMOEGAWA Optical Film Co., Ltd.) was laminated to one major surface of the transparent substrate such that a machine direction (MD) of the antiglare film during manufacturing was parallel to a longitudinal direction of the transparent substrate. The antiglare film (trade name: VH66, manufactured by Toppan TOMOEGAWA Optical Film Co., Ltd.) was manufactured by wet-coating with an antiglare solution by a roll to roll method.

(Formation of Antireflection Film)

Next, an antireflection film (a transparent Dry-AR) was formed on the major surface on a side where the antiglare film was laminated.

First, as a high-refractive-index layer, a 11 nm titanium oxide film was formed by a digital sputtering method. Titanium was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a metal film having a minute film thickness, and immediately thereafter, oxidation with oxygen gas was performed, and repeating this cycle at a high speed to form a film. Here, an oxygen flow rate during the oxidation with oxygen gas was 500 sccm, and an input power of an oxidation source was 1000 W.

Next, as a low-refractive-index layer, a 35 nm silicon oxide film was formed by the digital sputtering method. Silicon was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a silicon film having a minute film thickness, and immediately thereafter, oxidation with oxygen gas was performed, and repeating this cycle at a high speed to form a film. Here, an oxygen flow rate during the oxidation with oxygen gas was 500 sccm, and an input power of an oxidation source was 1000 W.

Next, as a high-refractive-index layer, a 104 nm titanium oxide film was formed by the digital sputtering method. Titanium was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a metal film having a minute film thickness, and immediately thereafter, oxidation with oxygen gas was performed, and repeating this cycle at a high speed to form a film. Here, an oxygen flow rate during the oxidation with oxygen gas was 500 sccm, and an input power of an oxidation source was 1000 W.

Subsequently, as a low-refractive-index layer, a 86 nm silicon oxide film was formed by the digital sputtering method. Silicon was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a silicon film having a minute film thickness, and immediately thereafter, oxidation with oxygen gas was performed, and repeating this cycle at a high speed to form a film. Here, an oxygen flow rate during the oxidation with oxygen gas was 500 sccm, and an input power of an oxidation source was 1000 W.

(Diffusion Value Measurement)

For the obtained antiglare film-provided transparent substrate, a longitudinal-direction diffusion value (vertical direction) and a short-direction diffusion value (lateral direction) were measured.

The measurement was performed by the above-described method using SMS-1000 manufactured by DM & S as a measuring apparatus.

(Subjective Evaluation of Antiglare Property of Antiglare Film-provided Transparent Substrate by Visual Inspection)

The obtained antiglare film-provided transparent substrate was visually evaluated. As an evaluation method, an antiglare property evaluation sample was installed at a position of a center information display (CID) of a vehicle, and a glare degree of a person at a front passenger seat was visually evaluated from a driver seat.

Determination criteria are as follows.

High: The glare is small and the image on the display can be clearly recognized.
Low: The glare is high and the image on the display is difficult to recognize.

(Example 2)

An antiglare film-provided transparent substrate was produced in the same manner as in Example 1, except that a DSR3 manufactured by Dai Nippon Printing Co. Ltd. was used as the antiglare film, and an antireflection film (a colored Dry-AR) was formed as follows, and a diffusion value measurement and an antiglare property evaluation were performed in the same manner as in Example 1. The antiglare film (DSR3, manufactured by Dai Nippon Printing Co. Ltd.) was manufactured by wet-coating with an antiglare solution by a roll to roll method.

(Formation of Antireflection Film)

An antireflection film (a colored Dry-AR) was formed on the major surface on the side where the antiglare film was laminated.

First, as a high-refractive-index layer, a 20 nm layer composed of a Mo-Nb-O layer was formed by the digital sputtering method. A sintered mixture of niobium and molybdenum in a weight ratio of 50:50 was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a metal film having a minute film thickness, and immediately thereafter, oxidation with oxygen gas was performed, and repeating this cycle at a high speed to form a film. Here, an oxygen flow rate during the oxidation with oxygen gas was 500 sccm, and an input power of an oxidation source was 1000 W.

Next, as a low-refractive-index layer, a 30 nm layer made of silicon oxide was formed by the digital sputtering method. Silicon was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a silicon metal film having a minute film thickness, and immediately thereafter, oxidation with oxygen gas was performed, and repeating this cycle at a high speed to form a film. Here, an oxygen flow rate during the oxidation with oxygen gas was 500 sccm, and an input power of an oxidation source was 1000 W.

Next, as a high-refractive-index layer, a 120 nm layer made of Mo-Nb-O was formed by the digital sputtering method. A sintered mixture of niobium and molybdenum in a weight ratio of 50:50 was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a metal film having a minute film thickness, and immediately thereafter, oxidation with oxygen gas was performed, and repeating this cycle at a high speed to form a film.

Here, an oxygen flow rate during the oxidation with oxygen gas was 500 sccm, and an input power of an oxidation source was 1000 W.

Subsequently, as a low-refractive-index layer, a 88 nm layer made of silicon oxide was formed by the digital sputtering method. Silicon was used as a target. While maintaining the pressure at 0.2 Pa with argon gas, pulse sputtering was performed under conditions of a frequency of 100 kHz, a power density of 10 W/cm$^2$, and a reversal pulse width of 3 $\mu$sec to form a silicon metal film having a minute film thickness, and immediately thereafter, oxidation with oxygen gas was performed, and repeating this cycle at a high speed to form a film.

Here, an oxygen flow rate during the oxidation with oxygen gas was 500 sccm, and an input power of an oxidation source was 1000 W.

(Example 3)

An antiglare film-provided transparent substrate was produced in the same manner as in Example 1 except that an antiglare film (trade name VH66, manufactured by Toppan TOMOEGAWA Optical Film Co., Ltd.) was laminated such that a width direction (TD) of the antiglare film during manufacturing was parallel to a longitudinal direction of the transparent substrate, and a diffusion value measurement and an antiglare property evaluation were performed in the same manner as in Example 1.

(Example 4)

An antiglare film-provided transparent substrate was produced in the same manner as in Example 2, except that an antiglare film (DSR3, manufactured by Dai Nippon Printing Co. Ltd.) was laminated such that a width direction (TD) of the antiglare film during manufacturing was parallel to a longitudinal direction of the transparent substrate, and a diffusion value measurement and an antiglare property evaluation were performed in the same manner as in Example 1.

The measurement and evaluation results of each Example are shown in Table 1.

Table 1

| | | Example 1 | Example 2 | Example 3 | Example 4 |
|---|---|---|---|---|---|
| Antiglare film | | VH66 | DSR3 | VH66 | DSR3 |
| Antireflection film | | Transparent Dry-AR | Colored Dry-AR | Transparent Dry-AR | Colored Dry-AR |
| Diffusion value | Longitudinal direction | 0.34 | 0.53 | 0.28 | 0.47 |
| | Short direction | 0.28 | 0.47 | 0.34 | 0.53 |

(continued)

| | Example 1 | Example 2 | Example 3 | Example 4 |
|---|---|---|---|---|
| Antiglare property evaluation | High (comparison with Example 3) | High (comparison with Example 4) | Low (comparison with Example 1) | Low (comparison with Example 2) |

When comparing Examples 1 and 3 and Examples 2 and 4 using the same antiglare film, in the antiglare film-provided transparent substrates of Examples 1 and 2, which are Working Examples, the antiglare film was laminated such that the longitudinal-direction diffusion value of the major surface was larger than the short-direction diffusion value, thereby obtaining a more excellent antiglare effect. On the other hand, in the antiglare film-provided transparent substrates of Examples 3 and 4 in which the antiglare film was laminated such that the longitudinal-direction diffusion value was smaller than the short-direction diffusion value, the antiglare effect was inferior.

Although the present invention has been described in detail with reference to specific embodiments, it is apparent to those skilled in the art that various changes and modifications can be made without departing from the spirit and scope of the present invention. The present application is based on a Japanese Patent Application (No. 2020-215369) filed on December 24, 2020, the contents of which are incorporated herein by reference.

Description of Reference Numerals

A Transparent substrate
2A, 4A Major surface
B Antiglare film
10, 210 Antiglare film-provided transparent substrate
12, 212 First major surface
14, 214 Second major surface
300 Measuring apparatus
350 Light source
362 First light
364 First reflected light
366 Second reflected light
368 Third reflected light
370 Detector

**Claims**

1. An antiglare film-provided transparent substrate comprising:

   a transparent substrate having two major surfaces opposed to each other; and
   an antiglare film laminated to one of the two major surfaces,
   wherein the major surfaces have a flat shape, and
   a longitudinal-direction diffusion value measured in a longitudinal direction of the major surface is larger than a short-direction diffusion value measured in a short direction of the major surface.

2. The antiglare film-provided transparent substrate according to claim 1, wherein a difference between the longitudinal-direction diffusion value and the short-direction diffusion value is 0.01 or more.

3. The antiglare film-provided transparent substrate according to claim 1 or 2, wherein when a major surface of the antiglare film-provided transparent substrate on a side where the antiglare film is laminated is defined as a first major surface, an antireflection film is further provided on a side of the first major surface.

4. The antiglare film-provided transparent substrate according to any one of claims 1 to 3, wherein an antifouling film is further provided on the side of the first major surface.

5. The antiglare film-provided transparent substrate according to any one of claims 1 to 4, wherein the transparent substrate is a glass substrate.

**6.** The antiglare film-provided transparent substrate according to claim 5, wherein the glass substrate is chemically strengthened.

**7.** The antiglare film-provided transparent substrate according to any one of claims 1 to 4, wherein the transparent substrate is a resin substrate.

**8.** A method for manufacturing an antiglare film-provided transparent substrate, the method comprising:

using a transparent substrate having two major surfaces opposed to each other, the major surfaces having a flat shape, and an antiglare film having a first-direction diffusion value measured on the antiglare film in a first direction larger than a second-direction diffusion value measured in a second direction orthogonal to the first direction; and
laminating the antiglare film to one major surface of the transparent substrate such that the first direction is parallel to a longitudinal direction of the major surface.

**9.** An image display device comprising the antiglare film-provided transparent substrate according to any one of claims 1 to 7.

FIG. 1

# FIG. 2

FIG. 3

## INTERNATIONAL SEARCH REPORT

| International application No. |
| --- |
| **PCT/JP2021/045646** |

| | |
| --- | --- |
| **A.** | **CLASSIFICATION OF SUBJECT MATTER** |

*C03C 17/38*(2006.01)i; *B32B 17/00*(2006.01)i; *B60J 1/00*(2006.01)i; *G02B 5/02*(2006.01)i
FI: C03C17/38; G02B5/02; B32B17/00; B60J1/00

According to International Patent Classification (IPC) or to both national classification and IPC

| | |
| --- | --- |
| **B.** | **FIELDS SEARCHED** |

Minimum documentation searched (classification system followed by classification symbols)

C03C17/38; B32B17/00; B60J1/00; G02B5/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2010-079197 A (FUJIFILM CORP) 08 April 2010 (2010-04-08)<br>  example 1, paragraphs [0007]-[0018], [0045]-[0046], [0054]-[0055], [0061]-[0075], fig. 14 | 1-3, 5, 7-9 |
| Y | | 4, 6 |
| Y | WO 2019/131803 A1 (NIPPON SHEET GLASS CO LTD) 04 July 2019 (2019-07-04)<br>  paragraph [0065] | 4 |
| Y | JP 2019-026248 A (AGC INC) 21 February 2019 (2019-02-21)<br>  paragraph [0036] | 6 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 January 2022** | **08 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/045646**

| Patent document cited in search report | | | Publication date (day/month/year) | Patent family member(s) | | | Publication date (day/month/year) |
|---|---|---|---|---|---|---|---|
| JP | 2010-079197 | A | 08 April 2010 | (Family: none) | | | |
| WO | 2019/131803 | A1 | 04 July 2019 | (Family: none) | | | |
| JP | 2019-026248 | A | 21 February 2019 | US<br>paragraph [0059]<br>EP<br>CN | 2019/0030865<br><br>3434472<br>109304907 | A1<br><br>A1<br>A | |

Form PCT/ISA/210 (patent family annex) (January 2015)

**EP 4 269 367 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11286083 A

- JP 2020215369 A